# EUROPÄISCHE PATENTSCHRIFT

(11) **EP 4 227 558 B1**
(45) Veröffentlichungstag und Bekanntmachung des Hinweises auf die Patenterteilung: **11.12.2024**
(21) Anmeldenummer: 22215036.9
(22) Anmeldetag: 20.12.2022
(51) Int. Cl.: F16H 61/4174

(54) **HYDRAULIKSYSTEM**
HYDRAULIC SYSTEM
SYSTÈME HYDRAULIQUE

(30) Priorität: 14.02.2022 DE 102022103426
(43) Veröffentlichungstag der Anmeldung: 16.08.2023
(73) Patentinhaber: CLAAS Selbstfahrende Erntemaschinen GmbH, 33428 Harsewinkel (DE)
(72) Erfinder: Strieker, Norbert, 33415 Verl (DE); Ostfechtel, Christian, 33442 Herzebrock-Clarholz (DE); Buhr, Jens, 48493 Wettringen (DE); Deckenbrock, Max, 48351 Everswinkel (DE)
(74) Vertreter: CLAAS Gruppe

(56) Entgegenhaltungen:
- EP-B1- 3 617 562
- DE-A1- 102013 101 869
- US-A- 5 775 103
- US-A1- 2014 083 290
- US-A1- 2018 304 174

## Beschreibung

Die vorliegende Erfindung betrifft ein Hydrauliksystem, insbesondere einer selbstfahrenden Erntemaschine, gemäß dem Oberbegriff des Anspruches 1.

Aus der EP 3 617 562 B1 ist ein Hydrauliksystem der eingangs genannten Art bekannt. Das Hydrauliksystem umfasst zumindest eine Hydraulikmotoranordnung und einen mit dieser Hydraulikmotoranordnung hydraulisch gekoppelten Hydraulikflüssigkeitsspeicher, wobei der zumindest einen Hydraulikmotoranordnung eine Entlüftungsvorrichtung zur Entlüftung einer Hydraulikflüssigkeit zugeordnet ist. Die Entlüftungsvorrichtung weist eine als Venturi-Düse ausgebildete Absaugeinrichtung zur Absaugung der Hydraulikflüssigkeit der zumindest einen Hydraulikmotoranordnung auf. Zur Bereitstellung eines Treibmediums ist gemäß der EP 3 617 562 B1 vorgesehen, das Treibmedium aus einem unter Druck stehenden Abschnitt des Hydrauliksystems abzuzweigen, wobei das Treibmedium durch eine externe Druckquelle bereitgestellt werden kann oder das Treibmedium wird aus vorgespannten Ausspülöl der Hydraulikmotoranordnung abgezweigt.

Bei der Verwendung des Ausspülöls der zumindest einen Hydraulikmotoranordnung als Treibmedium der als Venturi-Düse ausgebildeten Absaugeinrichtung ergeben sich Anforderungen, die sich aus dem Bedarf am Ausspülölvolumen resultieren, welche die EP 3 617 562 B1 nicht thematisiert. So werden hierbei eine Abstimmung von Öltemperatur und Absaugleistung erforderlich. Insbesondere muss zur Absicherung des Speisedrucks im Geschlossenkreis die Venturi-Düse bei einer Unterversorgung mit Treibmedium abgeregelt werden. Bei stehender lastfreier Hydraulikmotoranordnung wird die Ausspülung der Hydraulikmotoranordnung abgeschaltet und die Absaugung durch die Absaugeinrichtung wird unterbrochen. Dies führt dazu, dass sich das Motorgehäuse wegen des fehlenden Treibmediumvolumenstroms wieder füllt. Beim einem Anfahren wird der Treibmediumvolumenstrom zur Ausspülung wieder aktiviert und das Motorgehäuse entleert sich wieder. Dabei muss eine möglichst schnelle Entleerung des Motorgehäuses gewährleistet sein.

Ausgehend vom vorstehend genannten Stand der Technik liegt der Erfindung die Aufgabe zugrunde, ein Hydrauliksystem weiterzubilden, welches die Nachteile des Standes der Technik vermeidet, insbesondere, dass den vorstehend genannten Anforderungen bei der Verwendung von Ausspülöl als Treibmedium gerecht wird.

Diese Aufgabe wird durch ein Hydrauliksystem mit den Merkmalen des unabhängigen Patentanspruchs 1 gelöst. Vorteilhafte Ausführungsformen und Weiterbildungen sind den hiervon abhängigen Ansprüchen zu entnehmen.

Gemäß dem Anspruch 1 wird ein Hydrauliksystem, insbesondere einer selbstfahrenden Erntemaschine, vorgeschlagen, welches als Geschlossenkreissystem ausgeführt ist, wobei das Hydrauliksystem zumindest eine Hydraulikmotoranordnung und einen mit dieser Hydraulikmotoranordnung hydraulisch gekoppelten Hydraulikflüssigkeitsspeicher umfasst. Der zumindest einen Hydraulikmotoranordnung ist eine Entlüftungsvorrichtung zur Entlüftung einer Hydraulikflüssigkeit zugeordnet. Die Entlüftungsvorrichtung weist eine als Venturi-Düse ausgebildete Absaugeinrichtung zur Absaugung der Hydraulikflüssigkeit der zumindest einen Hydraulikmotoranordnung auf, wobei die Absaugeinrichtung mittels Unterdruck Hydraulikflüssigkeit aus der zumindest einen in wenigstens ein Motorgehäuse integrierten Hydraulikmotoranordnung durch eine Rücklaufleitung in den Hydraulikflüssigkeitsspeicher abführt. Erfindungsgemäß ist vorgesehen, dass durch eine Abzweigleitung eine Zuführung von vorgespanntem Ausspülöl der zumindest einen Hydraulikmotoranordnung als Treibmedium der Absaugeinrichtung vorgesehen ist, wobei in der Abzweigleitung ein vorgesteuertes Druckbegrenzungsventil angeordnet ist, welches mit einer Meldeleitung an das Motorgehäuse angeschlossen ist, wobei der Unterdruck im Motorgehäuse der Ansteuerung des Druckbegrenzungsventils dient. Um den maximal zur Verfügung stehenden Speisedruck zum Antrieb der Absaugungeinrichtung verfügbar zu haben, muss das Ausspülöl möglichst drosselfrei vom Motorgehäuse zur Absaugeinrichtung, d.h. zur Venturi-Düse, gelangen. Um das als Geschlossenkreis ausgeführte Hydrauliksystem gegen unzulässige Druckeinbrüche abzusichern, ist eine Speisedrucksicherung erforderlich. Dazu wird das vorgesteuerte Druckbegrenzungsventil mit Anschluss seiner Meldeleitung an das Motorgehäuse verwendet, um den Motorgehäusedruck zur Ansteuerung zu verwenden. Dadurch ist gewährleistet, dass das Druckbegrenzungsventil vollständig und drosselfrei geöffnet ist, sobald der erforderliche Mindestdruck des als Geschlossenkreis ausgeführten Hydrauliksystems überschritten wird. Kommt es zu in dem Hydrauliksystem zu einem Speisedruckeinbruch, so schließt das Druckbegrenzungsventil.

Insbesondere kann das Druckbegrenzungsventil dazu eingerichtet sein, die Entlüftungsvorrichtung bei einer Unterversorgung, insbesondere bei stehender, lastfreier Hydraulikmotoranordnung, mit dem von der zumindest einen Hydraulikmotoranordnung bereitgestellten Treibmedium abzuregeln. Dadurch kann gewährleistet werden, dass bei stehender lastfreier Hydraulikmotoranordnung die Ausspülung der Hydraulikmotoranordnung abgeschaltet und die Absaugung unterbrochen wird. Beim Anfahren der Hydraulikmotoranordnung wird die Ausspülung aktiviert, sodass der Treibmediumvolumenstrom respektive Ausspülölvolumen zur Verfügung steht, um das Motorgehäuse zu entleeren. Bei lastfreier Hydraulikmotoranordnung kann ein motorseitiges Ausspülventil das Treibmedium abschalten. Das Druckbegrenzungsventil kann unzulässige Speisedruckeinbrüche bei geöffneten Ausspülventil im Betrieb unter Last vermeiden.

Insbesondere kann die Entlüftungsvorrichtung eine der Absaugeinrichtung nachgeordnete Mischkammer umfassen, wobei die Mischkammer durch die Rücklaufleitung mit dem Hydraulikflüssigkeitsspeicher verbunden ist. Dabei kann die Mischkammer ausgangsseitig einen Diffusor aufweisen, der durch Anformung in die Mischkammer integriert ist oder als separates Element unmittelbar an diese angeschlossen ist, beispielsweise durch eine Flanschverbindung. Der Diffusor verbindet die Mischkammer mit der Rücklaufleitung.

Bevorzugt kann das Druckbegrenzungsventil in die Entlüftungsvorrichtung integriert sein, wobei das Druckbegrenzungsventil der als Venturi-Düse ausgebildeten Absaugeinrichtung vorgeschaltet ist. Hierdurch wird eine kompakte und bauraumoptimierte Ausgestaltung der Entlüftungsvorrichtung ermöglicht.

Gemäß einer bevorzugten Weiterbildung kann die zumindest eine Hydraulikmotoranordnung durch zumindest eine Luftansaugleitung mit dem Hydraulikflüssigkeitsspeicher verbunden sein, wobei ein Luftspeicher zur Wiederbelüftung beim Überführen der zumindest einen Hydraulikmotoranordnung in einen Lastzustand oder nach einem Gleichdruckbetrieb vorgesehen ist. Zur Belüftung des wenigstens einen abzusaugenden Motorgehäuses ist eine sehr kleine Blende in der jeweiligen Luftansaugleitung erforderlich, um die abzuscheidende Luftmenge möglichst gering zu halten. Um eine schnelle Ölabsaugung beim Anlaufen der lastfreien Hydraulikmotoranordnung zu gewährleisten, sind deshalb neben der reinen Luftversorgung zusätzliche Maßnahmen erforderlich. Wenn mehr als eine Hydraulikmotoranordnung abgesaugt werden sollen, ist jede mit einer eigenen individuellen Luftansaugleitung nebst Blende auszustatten.

Hierzu kann der Luftspeicher als ein in der Luftansaugleitung angeordneter Behälter ausgeführt und/oder durch eine Überdimensionierung eines Abschnitts der Luftansaugleitung ausgebildet sein, wobei der Abschnitt durch zwei Rückschlagventile begrenzt ist. Indem ein Luftvolumen in der Luftansaugleitung bzw. dem Behälter gespeichert wird, kann eine schnelle Wiederbelüftung beim Anlaufen der Hydraulikmotoranordnung oder nach einem Gleichdruckbetrieb, beispielsweise bei voller Fahrt eines Arbeitsfahrtzeugs, welches durch die Hydraulikmotoranordnung als hydrostatischer Fahrantrieb angetrieben wird, gewährleisten werden.

Weiterhin kann dem in der Luftansaugleitung angeordneten Luftspeicher eine der Anzahl an Hydraulikmotoren der zumindest einen Hydraulikmotoranordnung entsprechende Anzahl von Belüftungsventilen vorgeschaltet sein, die zwischen dem Hydraulikflüssigkeitsspeicher und dem Luftspeicher angeordnet sind.

Dabei kann das jeweilige Belüftungsventil als eine Kombination aus einer Blende und einem Rückschlagventil ausgebildet sein, deren Funktionen in einem gemeinsamen Ventilgehäuse vereint sind.

Hierzu kann das jeweilige Belüftungsventil einen hydraulikflüssigkeitsspeicherseitigen Anschluss und einen motorgehäuseseitigen Anschluss umfassen, wobei die Orientierung des jeweiligen Belüftungsventils in Einbaulage senkrecht zu einem den Hydraulikflüssigkeitsspeicher abdeckenden Bauteil ist.

Insbesondere kann das jeweilige Belüftungsventil einen relativbeweglichen Stößel aufweisen, der dem hydraulikflüssigkeitsspeicherseitigen Anschluss zugewandt einen oberen Dichtkegel und dem motorgehäuseseitigen Anschluss zugewandt einen mit einer Kerbe versehenen Dichtkegel aufweist. Sobald der Hydromotor wieder anläuft und die Absaugung aktiviert wird, kann sich das Speichervolumen synchron zum schnell absinkenden Gehäusedruck ausdehnen. Durch den senkrechten Einbau desjeweiligen Belüftungsventils wird das jeweilige Motorgehäuse zuerst ungedrosselt mit relativ viel Luft versorgt. Erst mit weiter absinkendem Motorgehäusedruck wird der Stößel entgegen der Gewichtskraft des Stößels hochgesaugt, sodass die gewünschte geringere Luftmenge, welche durch die Dimensionierung der Kerbe bestimmt ist, zugeführt wird.

Durch die Ausführung des Belüftungsventils als eine Kombination aus Blende und Rückschlagventil kann im lastfreien Zustand ein Volllaufen des Motorgehäuses vermieden werden. Der Stößel im Ventilgehäuse liegt mit seinem unteren Dichtkegel am Dichtungssitz des hydraulikflüssigkeitsspeicherseitigen Anschlusses an, sodass das Hydrauliköl im Motorgehäuse nicht durch die Luftansaugleitung in den Hydraulikflüssigkeitsspeicher zurückfließen kann. Unter Last liegt der Stößel mit seinem oberen Dichtkegel am Dichtungssitz des motorgehäuseseitigen Anschlusses an, sodass die Kerbe die Größenordnung des angesaugten Luftvolumenstroms bestimmt.

Die Betätigung des Stößels eines jeweiligen Belüftungsventils kann dabei in Abhängigkeit vom Aufbau des Unterdrucks im Motorgehäuse erfolgen.

Gemäß einer Weiterbildung kann der Entlüftungsvorrichtung eine in dem Hydraulikflüssigkeitsspeicher befindliche Filtereinheit zugeordnet, welche im Wesentlichen senkrecht stehend in dem Hydraulikflüssigkeitsspeicher angeordnet ist. Gegenüber einer geneigten Anordnung im Hydraulikflüssigkeitsspeicher ragt die Filtereinheit weiter über den Hydraulikölspiegel hinaus, was sich positiv auf die Luftabscheidung auswirkt.

Hierbei kann die Filtereinheit einen Luftabscheidefilter und einen Hydraulikölrücklauffilter umfassen, die an einem gemeinsamen Filtertragrahmen der Filtereinheit angeordnet sind. Der Luftabscheidefilter sollte möglichst weit über den Hydraulikölspiegel hinausragen. Insbesondere sollte der Luftabscheidefilter eine große Filteroberfläche aufweisen. Als zusätzlicher Effekt einer solchen vergrößerten Bauweise wird ein geringerer Gegendruck am Eingang der Mischkammer gewährleistet, was die Effizienz der Absaugung durch die als Venturi-Düse ausgebildete Absaugeinrichtung erhöht. Neben der guten Luftabscheidung der Anordnung der Filtereinheit schützt die Filterwirkung des Luftabscheidefilters die Arbeitshydraulik vor Partikeln im Falle eines Schadensereignisses in der abgesaugten Hydraulikmotoranordnung.

Des Weiteren kann dem Hydraulikölrücklauffilter auslaufseitig ein Austrittsfiltermodul nachgeschaltet sein, welches als Filtermaterial ein offenporiges Material enthält. Durch das Austrittsfiltermodul wird die Ölaustrittsgeschwindigkeit effektiv verringert und Verwirbelungen werden vermieden. Die im Hydrauliköl befindlichen Luftblasen aus dem Luftabscheidefilter können besser zur Oberfläche aufsteigen. Als offenporiges Material können beispielsweise Stahlwolle oder Polyamidfasern, insbesondere Polyamidfaserknäule, verwendet werden.

Bevorzugt kann der Luftabscheidefilter als Grobfilter ausgeführt sein.

Die vorliegende Erfindung wird nachstehend anhand eines in den Zeichnungen dargestellten Ausführungsbeispieles näher erläutert.

Es zeigen:
- Fig. 1: schematisch eine Seitenansicht einer als Feldhäcksler ausgeführten selbstfahrenden Erntemaschine;
- Fig. 2: eine vereinfachte schematische Ansicht eines Hydrauliksystems des Feldhäckslers;
- Fig. 3: eine schematische Teilansicht eines Hydraulikflüssigkeitsspeichers des Hydrauliksystems gemäß Fig. 2;
- Fig. 4: eine schematische Ansicht einer Absaugeinrichtung einer Entlüftungsvorrichtung einer Hydraulikmotoranordnung des Hydrauliksystems gemäß Fig. 2; und
- Fig. 5: eine schematische Darstellung einer Filtereinheit der Entlüftungsvorrichtung.

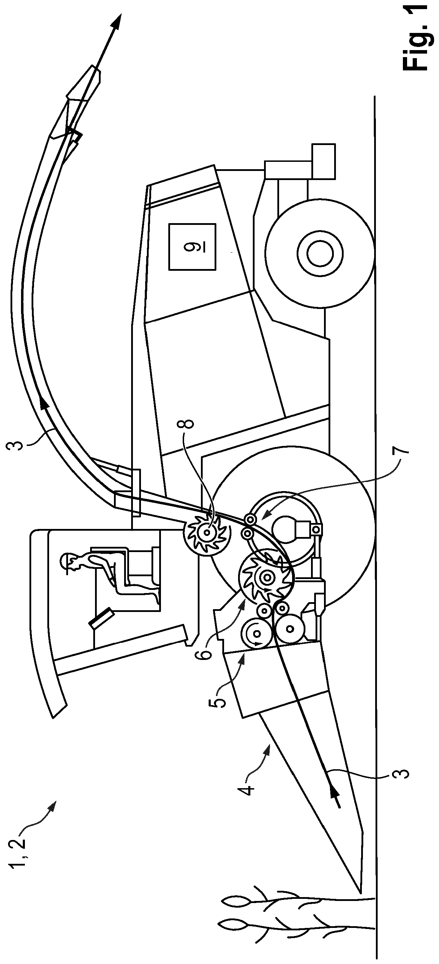

In Fig. 1 ist schematisch eine Seitenansicht einer als Feldhäcksler 2 ausgeführten selbstfahrenden Erntemaschine 1 bei der Ernte auf dem Feld dargestellt. Der Feldhäcksler 2 erntet beziehungsweise nimmt mittels eines Vorsatzgerätes 4 Pflanzen vom Feld auf, um das erhaltene Erntegut in Form eines Erntegutstroms - in Fig. 1 als mit Pfeilen versehene Linie 3 angedeutet - durch Arbeitsorgane, die als Bearbeitungs- und Förderorgane des Feldhäckslers 2 ausgeführt sind, zu führen und mittels einer Überladeeinrichtung in einen Ladebehälter eines - nicht dargestellten - Transportfahrzeugs abzuwerfen. Die Bearbeitungs- und Förderorgane des Feldhäckslers 2 umfassen unter anderem ein Einzugsorgan 5, welches aus mehreren in einem Einzugsgehäuse hintereinander angeordneten Walzenpaaren besteht. Weiterhin weist der Feldhäcksler 2 eine Häckseleinrichtung 6, die mittels einer rotierenden, mit Messern ausgestatteten Häckseltrommel das Erntegut in Zusammenwirkung mit einer Gegenschneide zerkleinert, eine der Häckseleinrichtung 6 in einem Förderschacht in Gutstromrichtung nachgelagerte Konditioniereinrichtung 7 sowie einen der Konditioniereinrichtung 7 im Förderschacht in Gutstromrichtung nachgelagerten Auswurfbeschleuniger 8, welcher das Erntegut 3 mittels rotierender Wurfpaddel für den sicheren Auswurf durch die Überladeeinrichtung beschleunigt, auf. Das Vorsatzgerät 4, das Einzugsorgan 5, die Häckseleinrichtung 6, die Konditioniereinrichtung 7 sowie der Auswurfbeschleuniger 8 werden nachfolgend als Arbeitsorgane bezeichnet. Im rückwärtigen Bereich des Feldhäckslers 2 ist ein Verbrennungsmotor 9 angeordnet, der dem Antrieb des Feldhäckslers 2 dient.

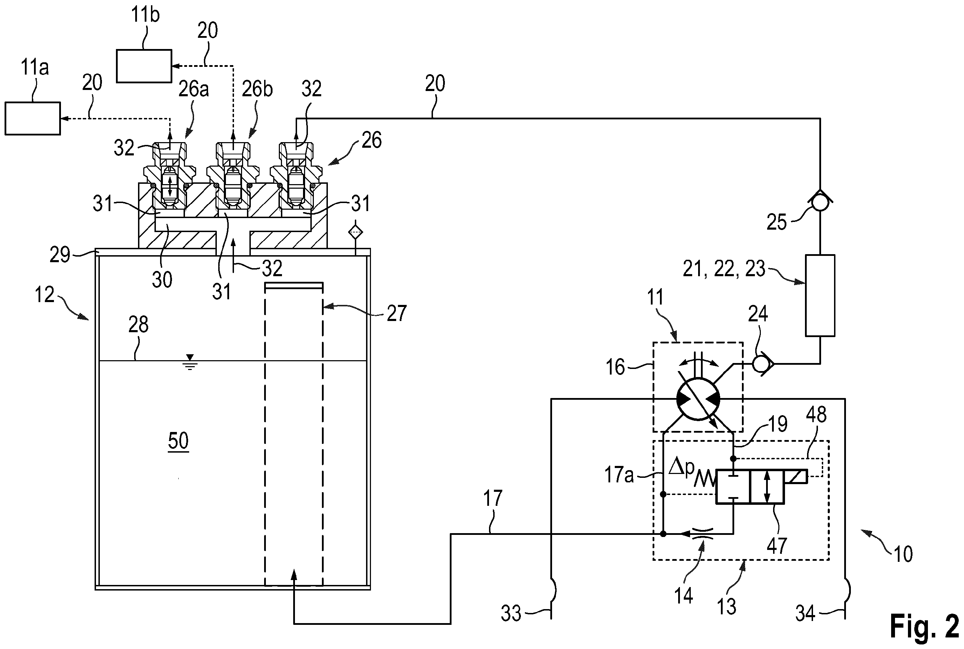

In Fig. 2 ist eine vereinfachte schematische Ansicht eines Hydrauliksystems 10 der als Feldhäckslers 2 ausgeführten selbstfahrenden Erntemaschine 1, dargestellt. Das Hydrauliksystem 10 des Feldhäckslers 2 ist als ein Geschlossenkreissystem ausgeführt. Das Hydrauliksystem 10 umfasst zumindest eine Hydraulikmotoranordnung 11, 11a, 11b und einen mit der zumindest einen Hydraulikmotoranordnung 11, 11a, 11b hydraulisch gekoppelten Hydraulikflüssigkeitsspeicher 12. Im dargestellten Ausführungsbeispiel sind lediglich exemplarisch drei Hydraulikmotoranordnungen 11, 11a und 11b angedeutet. Die Hydraulikmotoranordnungen 11, 11a und 11b können als hydrostatischer Fahrantrieb des Feldhäckslers 2, als Antriebsmotor des Vorsatzgerätes 4 sowie als Antriebsmotor des Einzugsorgans 5 ausgeführt sein. Hier und vorzugsweise sind die Hydraulikmotoranordnungen 11, 11a und 11b als Einmotoranordnungen ausgeführt. Denkbar ist auch eine Ausführung einer der Hydraulikmotoranordnungen 11, 11a, 11b als eine Doppelmotoranordnung.

Eine Zuleitung 33 führt der zumindest einen Hydraulikmotoranordnung 11 von einer nicht dargestellten Hydraulikpumpe unter Hochdruck stehendes Hydrauliköl 50 aus dem Hydraulikflüssigkeitsspeicher 12 zu, welches durch eine Ableitung 34 in diesen zurückfließt.

Der zumindest einen Hydraulikmotoranordnung 11 ist eine Entlüftungsvorrichtung 13 zur Entlüftung einer Hydraulikflüssigkeit zugeordnet, wobei die Entlüftungsvorrichtung 13 eine als Venturi-Düse 15 ausgebildete Absaugeinrichtung 14 zur Absaugung der Hydraulikflüssigkeit aus der zumindest einen Hydraulikmotoranordnung 11 aufweist. Aus Vereinfachungsgründen ist die Entlüftungsvorrichtung 13 nur für die Hydraulikmotoranordnung 11 explizit dargestellt. Jede weitere Hydraulikmotoranordnung 11a, 11b sollte mit einer individuellen Entlüftungsvorrichtung 13 ausgestattet sein. Die nachstehenden Ausführungen gelten entsprechend für jede weitere Hydraulikmotoranordnung 11a, 11b.

Die Absaugeinrichtung 14 führt mittels Unterdruck Δp Hydraulikflüssigkeit aus der zumindest einen in wenigstens ein Motorgehäuse 16 integrierten Hydraulikmotoranordnung 11 durch eine Rücklaufleitung 17 in den Hydraulikflüssigkeitsspeicher 12 ab. Zum Aufbau des Unterdrucks wird ein die Venturi-Düse 15 durchströmendes Treibmedium 18 aus einem unter Druck stehenden Abschnitt des Hydrauliksystems 10 abgezweigt. Hierzu ist eine Abzweigleitung 19 vorgesehen, die der Zuführung von vorgespanntem Ausspülöl der zumindest einen Hydraulikmotoranordnung 11 als Treibmedium 18 der Absaugeinrichtung 14 dient. Durch eine Absaugleitung 17a wird die Hydraulikflüssigkeit aus dem Motorgehäuse 16 aufgrund der von der Venturi-Düse erzeugten Sogwirkung abgesaugt.

Die Hydraulikmotoranordnung 11 ist durch eine Luftansaugleitung 20 mit dem Hydraulikflüssigkeitsspeicher 12 verbunden. Es ist ein Luftspeicher 21 zur Wiederbelüftung beim Überführen der zumindest einen Hydraulikmotoranordnung 11 in einen Lastzustand oder nach einem Gleichdruckbetrieb vorgesehen. Der Hydraulikmotoranordnung 11 ist ein in der Luftansaugleitung 20 vorgesehenes Rückschlagventil 24 vorgeschaltet, welches das Rückströmen von Hydrauliköl 50 aus dem Motorgehäuse 16 in Richtung des Hydraulikflüssigkeitsspeichers 1 verhindert. Der Luftspeicher 21 ist zwischen dem Hydraulikflüssigkeitsspeicher 12 und der Hydraulikmotoranordnung 11 angeordnet. Der Luftspeicher 21 kann als ein in der Luftansaugleitung 20 angeordneter Behälter 22 ausgeführt sein. Alternativ oder zusätzlich kann der Luftspeicher 21 durch eine Überdimensionierung eines Abschnitts 23 der Luftansaugleitung 20 ausgebildet sein. Bei einer Ausführung des Luftspeicher 21 als ein überdimensionierter Abschnitt 23 in der Luftansaugleitung 20 ist dieser durch ein strichliniert dargestelltes zweites Rückschlagventil 25 begrenzt.

Dem in der Luftansaugleitung 20 angeordneten Luftspeicher 21 ist eine der Anzahl an Hydraulikmotoren der zumindest einen Hydraulikmotoranordnung 11, 11a, 11b entsprechende Anzahl von Belüftungsventilen 26, 26a, 26b vorgeschaltet. Die Belüftungsventile 26, 26a, 26b sind zwischen dem Hydraulikflüssigkeitsspeicher 12 und dem Luftspeicher 21 angeordnet. Die Orientierung des jeweiligen Belüftungsventils 26, 26a, 26b ist in seiner Einbaulage senkrecht zu einem den Hydraulikflüssigkeitsspeicher 12 abdeckenden Bauteil 29, hier einem Tankdeckel. Eine an dem Bauteil 29 angeordnete Anschlusseinheit 30 nimmt die Belüftungsventile 26, 26a, 26b auf, die mit ihrem jeweiligen hydraulikflüssigkeitsspeicherseitigen Anschluss 31 durch die Anschlusseinheit 30 fluidleitend mit dem Hydraulikflüssigkeitsspeicher 12 verbunden sind, um Luft aus dem Hydraulikflüssigkeitsspeicher 12 ansaugen zu können, was durch den Strömungsrichtungspfeil 32 angedeutet ist.

Die Entlüftungsvorrichtung 13 umfasst des Weiteren eine in dem Hydraulikflüssigkeitsspeicher 12 befindliche Filtereinheit 27, welche senkrecht stehend in dem Hydraulikflüssigkeitsspeicher 12 angeordnet ist. Mit dem Bezugszeichen 28 ist ein Hydraulikölspiegel bezeichnet, der den Füllstand mit Hydrauliköl 50 im Hydraulikflüssigkeitsspeicher 12 wiedergibt. Die Filtereinheit 27 ist im Wesentlichen senkrecht stehend in dem Hydraulikflüssigkeitsspeicher 12 angeordnet.

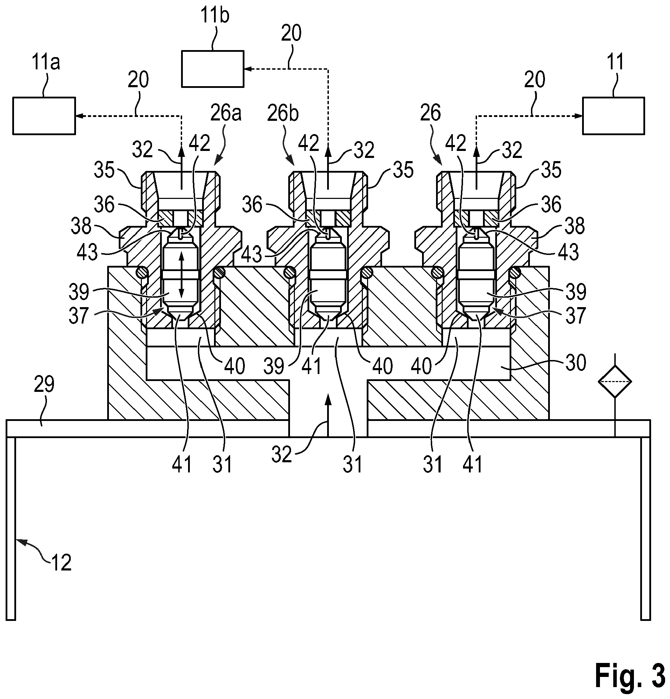

In Fig. 3 ist eine schematische Teilansicht des Hydraulikflüssigkeitsspeichers 12 des Hydrauliksystems 10 gemäß Fig. 2 dargestellt. Die Belüftungsventile 26, 26a, 26b sind hier und vorzugsweise identisch ausgeführt. Denkbar ist aber auch, dass diese unterschiedlich dimensioniert sind, wenn dies aufgrund der jeweiligen Bauform einer der Hydraulikmotoranordnungen 11, 11, 11b erforderlich sein sollte.

Das jeweilige Belüftungsventil 26, 26a, 26b umfasst einen dem hydraulikflüssigkeitsspeicherseitigen Anschluss 31 gegenüberliegenden motorgehäuseseitigen Anschluss 35. Die Orientierung des jeweiligen Belüftungsventils 26, 26a, 26b in Einbaulage ist senkrecht zu dem den Hydraulikflüssigkeitsspeicher 12 abdeckenden Bauteil 29. Das jeweilige Belüftungsventil 26, 26a, 26b ist als eine Kombination aus einer Blende 36 und einem Rückschlagventil 37 ausgebildet ist, deren Funktionen in einem gemeinsamen Ventilgehäuse 38 vereint sind. Zur Belüftung des jeweils abzusaugenden Motorgehäuses 16 ist eine sehr kleine Blende erforderlich, um die abzuscheidende Luftmenge in der Filtereinheit 27 möglichst gering zu halten.

Im Ventilgehäuse 38 des jeweiligen Belüftungsventils 26, 26a, 26b ist ein Stößel 39 angeordnet, der sich abschnittsweise zwischen einem Dichtungssitz 40 auf der Seite des hydraulikflüssigkeitsspeicherseitigen Anschlusses 31 und der Blende 36 auf der Seite des motorgehäuseseitigen Anschlusses 35 erstreckt. An seiner Unterseite weist der Stößel 39 einen unteren Dichtkegel 41 auf, welcher im lastfreien Zustand der Hydraulikmotoranordnung 11 aufgrund seiner Gewichtskraft auf dem Dichtungssitz 40 aufliegt, wie in Fig. 3 dargestellt. An seiner Oberseite weist der Stößel 39 eine, insbesondere halbkreisförmige, Nut oder Kerbe 42 im oberen Dichtkegel 43 auf, deren Durchmesser weniger als ein Drittel, insbesondere etwa ein Zehntel, des Öffnungsdurchmessers der Blende 36 beträgt. Tritt ein durch die Venturi-Düse im Motorgehäuse 16 erzeugter Unterdruck Δp auf, führt dies dazu, dass Luft durch die Luftansaugleitung 20 angesogen wird, wobei in Abhängigkeit des sich aufbauenden Unterdrucks Δp im Motorgehäuse 16, d.h. bei einem Überschreiten eines Schwellwertes für die Druckdifferenz zwischen dem Inneren des Hydraulikflüssigkeitsspeichers 12 und dem Motorgehäuse 16, eine Bewegung des Stö-ßels 39 in vertikaler Richtung bewirkt wird, bis der Stößel 39 mit seinem oberen Dichtkegel 43 an der Öffnung der Blende 36 dichtend anliegt. Lediglich die Nut bzw. Kerbe 42 im oberen Dichtkegel 43 ermöglicht ein Hindurchströmen von Luft durch den verbleibenden Spalt zwischen der Blende 36 und der Nut bzw. Kerbe 42.

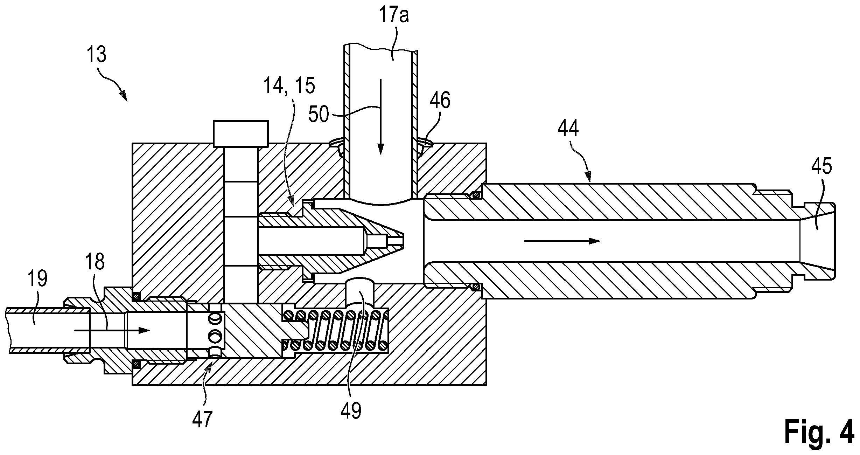

Die Darstellung in Fig. 4 zeigt eine schematische Ansicht der Absaugeinrichtung 14 der Entlüftungsvorrichtung 13 einer der Hydraulikmotoranordnungen 11, 11a, 11b des Hydrauliksystems 10 gemäß Fig. 2. Die Entlüftungsvorrichtung 13 umfasst neben der als Venturi-Düse 15 ausgebildeten Absaugeinrichtung 14 eine dieser nachgeordnete Mischkammer 44. Die Mischkammer 44 ist durch die Rücklaufleitung 17 mit dem Hydraulikflüssigkeitsspeicher 12 verbunden. Die Mischkammer 44 kann ausgangsseitig einen Diffusor 45 aufweisen, der in die Mischkammer 44 integriert ist, wie in Fig. 4 dargestellt, oder unmittelbar an diese angeschlossen ist, beispielsweise durch eine Flanschverbindung. Der Diffusor 45 verbindet dann die Mischkammer 44 mit der Rücklaufleitung 17. Die Abzweigleitung 19 verbindet die Entlüftungsvorrichtung 13 mit dem Motorgehäuse 16, aus welchem das vorgespannte Ausspülöl als Treibmedium 18 abgezweigt wird. Die Abzweigleitung 19 ist an einen motorgehäuseseitigen Anschluss 46 der Entlüftungsvorrichtung 13 angeschlossen.

In der Abzweigleitung 19 ist ein vorgesteuertes Druckbegrenzungsventil 47 angeordnet, welches mit einer Meldeleitung 48 an das Motorgehäuse 16 angeschlossen ist. Der betriebssituationsabhängig vorherrschende Unterdruck Δp im Motorgehäuse dient der Ansteuerung des Druckbegrenzungsventils. Das Druckbegrenzungsventil 47 ist in die Absaugeinrichtung 14 integriert ist, wobei das Druckbegrenzungsventil 47 der als Venturi-Düse 15 ausgebildeten Absaugeinrichtung 14 vorgeschaltet ist. Die Meldeleitung 48 steht durch einen Anschluss 49 mit dem Druckbegrenzungsventil 47 in Verbindung. Die Verwendung des Motorgehäusedrucks anstelle des Umgebungsdruck bietet sich konstruktiv an, da im Bauraum des Druckbegrenzungsventils 47 eine Ausführung der Meldeleitung 48 als kleine Querbohrung realisierbar ist. Hierdurch wird eine zusätzliche Tankleitung eingespart.

Das aus dem Motorgehäuse 16 abgesaugte Hydrauliköl 50 strömt durch motorgehäuseseitigen Anschluss 46 zu Mischkammer 44, in welcher es sich mit dem Treibmedium 18 vermischt und durch die Rücklaufleitung 17 zurück in den Hydraulikflüssigkeitsspeicher 12 gelangt.

Ein wesentlicher Aspekt ist, dass das Druckbegrenzungsventil 47 dazu eingerichtet ist, die Entlüftungsvorrichtung 13 bei einer Unterversorgung, insbesondere bei stehender lastfreier Hydraulikmotoranordnung 11, 11a, 11b, mit dem von der zumindest einen abzusaugenden Hydraulikmotoranordnung 11, 11a, 11b bereitgestellten Treibmedium 18 abzuregeln. Dadurch kann gewährleistet werden, dass bei stehender lastfreier Hydraulikmotoranordnung 11, 11a, 11b die Ausspülung der Hydraulikmotoranordnung 11, 11a, 11b abgeschaltet und die Absaugung unterbrochen wird.

Beim Anfahren der Hydraulikmotoranordnung 11, 11a, 11b wird die Ausspülung aktiviert, sodass der Treibmediumvolumenstrom respektive Ausspülölvolumen zur Verfügung steht, um das Motorgehäuse 16 zu entleeren. Um den maximal zur Verfügung stehenden Speisedruck zum Antrieb der Absaugeinrichtung 14 verfügbar zu haben, muss das Ausspülöl möglichst drosselfrei vom Motorgehäuse 16 zur Absaugeinrichtung 14, d.h. zur Venturi-Düse 15, gelangen. Um das als Geschlossenkreis ausgeführte Hydrauliksystem 10 gegen unzulässige Druckeinbrüche abzusichern, ist das vorgesteuerte Druckbegrenzungsventil 47 mit seiner Meldeleitung 48 an das Motorgehäuse 16 angeschlossen, um den Unterdruck Δp im Motorgehäuse 16 zur Ansteuerung zu verwenden. Dadurch ist gewährleistet, dass das Druckbegrenzungsventil 47 vollständig und drosselfrei geöffnet ist, sobald der erforderliche Mindestdruck des als Geschlossenkreis ausgeführten Hydrauliksystems 10 überschritten wird. Kommt es zu in dem Hydrauliksystem 10 zu einem Speisedruckeinbruch, so schließt das Druckbegrenzungsventil 47.

Bei einer stehender Hydraulikmotoranordnung 11, 11a, 11b kann sich das jeweilige Motorgehäuse 16 wegen des fehlenden Treibmediumvolumenstroms wieder füllen. Mit dem Anfahren wird der Absaugeinrichtung 14 wieder Treibmedium 18 zugeführt, so dass die Absaugung des Gehäuses 16 durch die Absaugeinrichtung 14 aktiviert wird. Hierbei muss sichergestellt sein, dass die Entlüftung des Motorgehäuses 16 schnellstmöglich erfolgt.

Um das Volllaufen des Motorgehäuses 16 im lastfreien Zustand zu vermeiden, ist das Rücklaufventil 24 in der Luftansaugleitung 20 vorgesehen. Um eine schnelle Wiederbelüftung beim Anlaufen der Hydraulikmotoranordnung 11, 11a, 11b oder nach einem Gleichdruckbetrieb bei voller Fahrt zu gewährleisten, wird ein Luftvolumen im Luftspeicher 21 der Luftansaugleitung 20 gespeichert. Sobald die jeweilige Hydraulikmotoranordnung 11, 11a, 11b wieder anläuft und die Absaugung aktiviert wird, kann sich das Speichervolumen synchron zum schnell absinkenden Druck im Motorgehäuse 16 ausdehnen.

Durch die senkrecht eingebauten Belüftungsventile 26, 26a, 26b wird das jeweilige Motorgehäuse 16 zuerst ungedrosselt mit relativ viel Luft versorgt. Erst mit weiter absinkendem Druck im Motorgehäuse 16 wird der Stößel 39 hochgesaugt und die gewünschte geringe Luftmenge zugeführt, indem die Luft nur noch durch die Nut bzw. Kerbe 42 angesaugt wird. Hierdurch wird der zur Belüftung des abzusaugenden Motorgehäuses 16 Luftvolumenstrom reduziert, um die abzuscheidende Luftmenge in der Filtereinheit 27 so gering wie möglich zu halten. In dieser Hochlaufzeit, die vom sich aufbauenden Unterdruck Δp im Motorgehäuse 16 abhängt, kann das Motorgehäuse 16 für den Weiterbetrieb ausreichend entleert werden.

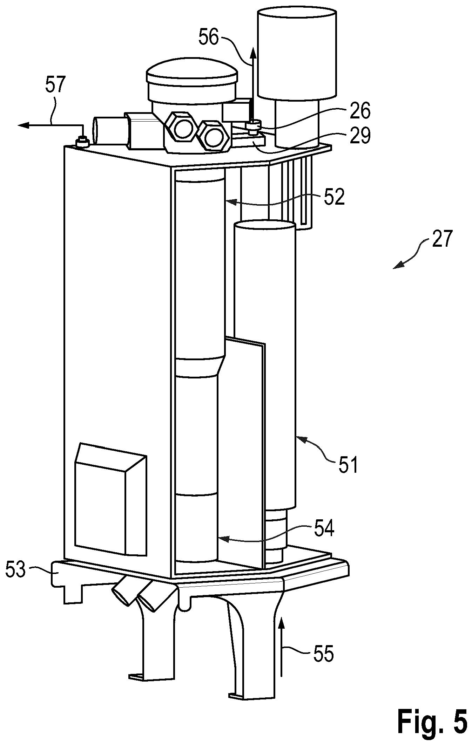

In Fig. 5 ist eine schematische Darstellung der Filtereinheit 27 der Entlüftungsvorrichtung 13 gezeigt. Der Entlüftungsvorrichtung 13 ist die in dem Hydraulikflüssigkeitsspeicher 12 befindliche Filtereinheit 27 zugeordnet, welche im Wesentlichen senkrecht stehend in dem Hydraulikflüssigkeitsspeicher 12 angeordnet ist. Die Filtereinheit 27 umfasst einen Luftabscheidefilter 51 und einen Hydraulikölrücklauffilter 52, die in einem gemeinsamen Filtertragrahmen 53 angeordnet sind. Dem Hydraulikölrücklauffilter 52 ist auslaufseitig ein Austrittsfiltermodul 54 nachgeschaltet, welches als Filtermaterial Polyamidfasern, insbesondere zumindest ein Polyamidfaserknäul, enthält. Dadurch wird die Austrittsgeschwindigkeit des Hydrauliköls 50 effektiv verringert und Verwirbelungen werden vermieden. Die im Hydrauliköl 50 befindlichen Luftblasen aus dem Luftabscheidefilter 51 können besser zur Oberfläche aufsteigen.

Ein von der Absaugeinrichtung 14 kommender Volumenstrom 55, welcher das Ausspülöl respektive Treibmedium 18 und Luft enthält, wird dem Luftabscheidefilter 51 zugeführt. Durch die an dem den Hydraulikflüssigkeitsspeicher 12 abdeckenden Bauteil 29 angeordneten Belüftungsventile 26, 26a, 26b wird ein Luftvolumenstrom 56 angesaugt, welcher in die Luftansaugleitung 20 gelangt.

### Bezugszeichenliste

| | | | |
|---|---|---|---|
| 1 | Erntemaschine | 29 | Bauteil |
| 2 | Feldhäcksler | 30 | Anschlusseinheit |
| 3 | Erntegutstrom | 31 | Anschluss |
| 4 | Vorsatzgerät | 32 | Strömungsrichtungspfeil |
| 5 | Einzugsorgan | 33 | Zuleitung |
| 6 | Häckseleinrichtung | 34 | Ableitung |
| 7 | Konditioniereinrichtung | 35 | Anschluss |
| 8 | Auswurfbeschleuniger | 36 | Blende |
| 9 | Verbrennungsmotor | 37 | Rückschlagventil |
| 10 | Hydrauliksystem | 38 | Ventilgehäuse |
| 11 | Hydraulikmotoranordnung | 39 | Stößel |
| 11a | Hydraulikmotoranordnung | 40 | Dichtungssitz |
| 11b | Hydraulikmotoranordnung | 41 | Unterer Dichtkegel |
| 12 | Hydraulikflüssigkeitsspeicher | 42 | Nut, Kerbe |
| 13 | Entlüftungsvorrichtung | 43 | Oberer Dichtkegel |
| 14 | Absaugeinrichtung | 44 | Mischkammer |
| 15 | Venturi-Düse | 45 | Diffusor |
| 16 | Motorgehäuse | 46 | Anschluss |
| 17 | Rücklaufleitung | 47 | Druckbegrenzungsventil |
| 17a | Absaugleitung | 48 | Meldeleitung |
| 18 | Treibmedium | 49 | Anschluss |
| 19 | Abzweigleitung | 50 | Hydrauliköl |
| 20 | Luftansaugleitung | 51 | Luftabscheidefilter |
| 21 | Luftspeicher | 52 | Hydraulikölrücklauffilter |
| 22 | Behälter | 53 | Filtertragrahmen |
| 23 | Abschnitt von 20 | 54 | Austrittsfiltermodul |
| 24 | Rückschlagventil | 55 | Volumenstrom |
| 25 | Rückschlagventil | 56 | Luftvolumenstrom |
| 26 | Belüftungsventil | | |
| 26a | Belüftungsventils | Δp | Unterdruck |
| 26b | Belüftungsventils | | |
| 27 | Filtereinheit | | |
| 28 | Hydraulikölspiegel | | |

## Patentansprüche

1. Hydrauliksystem (10), welches als Geschlossenkreissystem ausgeführt ist, wobei das Hydrauliksystem (10) zumindest eine Hydraulikmotoranordnung und einen mit dieser Hydraulikmotoranordnung (11, 11a, 11b) hydraulisch gekoppelten Hydraulikflüssigkeitsspeicher (12) umfasst, wobei der zumindest einen Hydraulikmotoranordnung (11, 11a, 11b) eine Entlüftungsvorrichtung (13) zur Entlüftung einer Hydraulikflüssigkeit (50) zugeordnet ist, wobei die Entlüftungsvorrichtung (13) eine als Venturi-Düse (15) ausgebildete Absaugeinrichtung (14) zur Absaugung der Hydraulikflüssigkeit (50) der zumindest einen Hydraulikmotoranordnung (11, 11a, 11b) aufweist, wobei die Absaugeinrichtung (14) mittels Unterdruck (Δp) Hydraulikflüssigkeit (50) aus der zumindest einen in wenigstens ein Motorgehäuse (16) integrierten Hydraulikmotoranordnung (11, 11a, 11b) durch eine Rücklaufleitung (17) in den Hydraulikflüssigkeitsspeicher (12) abführt, **dadurch gekennzeichnet, dass** durch eine Abzweigleitung (19) eine Zuführung von vorgespanntem Ausspülöl der zumindest einen Hydraulikmotoranordnung (11, 11a, 11b) als Treibmedium (18) der Absaugeinrichtung (14) vorgesehen ist, wobei in der Abzweigleitung (19) ein vorgesteuertes Druckbegrenzungsventil (47) angeordnet ist, welches mit einer Meldeleitung (48) an das Motorgehäuse (16) angeschlossen ist, wobei der Unterdruck (Δp) im Motorgehäuse (16) der Ansteuerung des Druckbegrenzungsventils (47) dient.

2. Hydrauliksystem (10) nach Anspruch 1, **dadurch gekennzeichnet, dass** das Druckbegrenzungsventil (47) dazu eingerichtet ist, die Entlüftungsvorrichtung (13) bei einer Unterversorgung, insbesondere bei stehender, lastfreier Hydraulikmotoranordnung, mit dem von der zumindest einen Hydraulikmotoranordnung (11, 11a, 11b) bereitgestellten Treibmedium (18) abzuregeln.

3. Hydrauliksystem (10) nach Anspruch 1 oder 2, **dadurch gekennzeichnet, dass** die Entlüftungsvorrichtung (13) eine der Absaugeinrichtung (14) nachgeordnete Mischkammer (44) umfasst, wobei die Mischkammer (44) durch die Rücklaufleitung (17) mit dem Hydraulikflüssigkeitsspeicher (12) verbunden ist.

4. Hydrauliksystem (10) nach einem der Ansprüche 1 bis 3, **dadurch gekennzeichnet, dass** das Druckbegrenzungsventil (47) in die Entlüftungsvorrichtung (13) integriert ist, wobei das Druckbegrenzungsventil (47) der als Venturi-Düse (15) ausgebildeten Absaugeinrichtung (14) vorgeschaltet ist.

5. Hydrauliksystem (10) nach einem der Ansprüche 1 bis 4, **dadurch gekennzeichnet, dass** die zumindest eine Hydraulikmotoranordnung (11, 11a, 11b) durch eine Luftansaugleitung (20) mit dem Hydraulikflüssigkeitsspeicher (41) verbunden ist, wobei ein Luftspeicher (21) zur Wiederbelüftung beim Überführen der zumindest einen Hydraulikmotoranordnung (11, 11a, 11b) in einen Lastzustand oder nach einem Gleichdruckbetrieb vorgesehen ist.

6. Hydrauliksystem (10) nach Anspruch 5, **dadurch gekennzeichnet, dass** der Luftspeicher (21) als ein in der Luftansaugleitung (20) angeordneter Behälter (22) ausgeführt und/oder durch eine Überdimensionierung eines Abschnitts (23) der Luftansaugleitung (20) ausgebildet ist, wobei der Abschnitt (23) durch zwei Rückschlagventile (24, 25) begrenzt ist.

7. Hydrauliksystem (10) nach einem der Ansprüche 5 oder 6, **dadurch gekennzeichnet, dass** dem in der Luftansaugleitung (20) angeordneten Luftspeicher (21) eine der Anzahl an Hydraulikmotoren der zumindest einen Hydraulikmotoranordnung (11, 11a, 11b) entsprechende Anzahl von Belüftungsventilen (26, 26a, 26b) vorgeschaltet ist, die zwischen dem Hydraulikflüssigkeitsspeicher (12) und dem Luftspeicher (21) angeordnet sind.

8. Hydrauliksystem (10) nach Anspruch 7, **dadurch gekennzeichnet, dass** das jeweilige Belüftungsventil (26, 26a, 26b) als eine Kombination aus einer Blende (36) und einem Rückschlagventil (37) ausgebildet ist, deren Funktionen in einem gemeinsamen Ventilgehäuse (38) vereint sind.

9. Hydrauliksystem (10) nach Anspruch 8, **dadurch gekennzeichnet, dass** das jeweilige Belüftungsventil (26, 26a, 26b) einen hydraulikflüssigkeitsspeicherseitigen Anschluss (31) und einen motorgehäuseseitigen Anschluss (35) umfasst, wobei die Orientierung des jeweiligen Belüftungsventils (26, 26a, 26b) in Einbaulage senkrecht zu einem den Hydraulikflüssigkeitsspeicher (12) abdeckenden Bauteil (29) ist.

10. Hydrauliksystem (10) nach Anspruch 9 **dadurch gekennzeichnet, dass** das jeweilige Belüftungsventil (26, 26a, 26b) einen relativbeweglichen Stößel (39) aufweist, der dem hydraulikflüssigkeitsspeicherseitigen Anschluss (31) zugewandt einen unteren Dichtkegel (41) und dem motorgehäuseseitigen Anschluss (35) einen mit einer Kerbe (42) versehenen oberen Dichtkegel (43) aufweist.

11. Hydrauliksystem (10) nach Anspruch 10, **dadurch gekennzeichnet, dass** der Stößel (39) eines jeweiligen Belüftungsventils (26, 26a, 26b) in Abhängigkeit vom Aufbau des Unterdrucks (Δp) im jeweiligen Motorgehäuse (16) betätigbar ist.

12. Hydrauliksystem (10) nach einem der vorangehenden Ansprüche, **dadurch gekennzeichnet, dass** der Entlüftungsvorrichtung (13) eine in dem Hydraulikflüssigkeitsspeicher (12) befindliche Filtereinheit (27) zugeordnet ist, welche im Wesentlichen senkrecht stehend in dem Hydraulikflüssigkeitsspeicher (12) angeordnet ist.

13. Hydrauliksystem (10) nach Anspruch 12, **dadurch gekennzeichnet, dass** die Filtereinheit (27) einen Luftabscheidefilter (51) und einen Hydraulikölrücklauffilter (52) umfasst, die an einem gemeinsamen Filtertragrahmen (53) angeordnet sind.

14. Hydrauliksystem (10) nach Anspruch 13, **dadurch gekennzeichnet, dass** dem Hydraulikölrücklauffilter (52) auslaufseitig ein Austrittsfiltermodul (54) nachgeschaltet ist, welches als Filtermaterial ein offenporiges Material enthält.

15. Hydrauliksystem (10) nach Anspruch 13 oder 14, **dadurch gekennzeichnet, dass** der Luftabscheidefilter (51) als Grobfilter ausgeführt ist.

## Claims

1. A hydraulic system (10) which is configured as a closed circuit system, wherein the hydraulic system (10) comprises at least one hydraulic motor assembly and a hydraulic fluid reservoir (12) hydraulically coupled to this hydraulic motor assembly (11, 11a, 11b), wherein a deaeration device (13) for deaerating a hydraulic fluid (50) is associated with the at least one hydraulic motor assembly (11, 11a, 11b), wherein the deaeration device (13) has a suction means (14) configured as a Venturi nozzle (15) in order to aspirate the hydraulic fluid (50) of the at least one hydraulic motor assembly (11, 11a, 11b), wherein the suction means (14) removes hydraulic fluid (50) from the at least one hydraulic motor assembly (11, 11a, 11b) integrated into at least one motor housing (16) through a return line (17) into the hydraulic fluid reservoir (12) by means of a partial vacuum (Δp), **characterized in that** a supply of pre-pressurized scavenging oil of the at least one hydraulic motor assembly (11, 11a, 11b) is provided through a branch line (19) as the working medium (18) of the suction means (14), wherein a pilot-controlled pressure limiting valve (47) is disposed in the branch line (19) and is connected to the motor housing (16) by a signal line (48), wherein the partial vacuum (Δp) in the motor housing (16) serves to control the pressure limiting valve (47).

2. The hydraulic system (10) according to claim 1, **characterized in that**, in the case of an insufficient supply of the working medium (18) provided from the at least one hydraulic motor assembly (11, 11a, 11b), in particular in the case of a stationary, load-free hydraulic motor assembly, the pressure limiting valve (47) is configured to slow down the deaeration device (13).

3. The hydraulic system (10) according to claim 1 or claim 2, **characterized in that** the deaeration device (13) comprises a mixing chamber (44) downstream of the suction means (14), wherein the mixing chamber (44) is connected to the hydraulic fluid reservoir (12) by the return line (17).

4. The hydraulic system (10) according to one of claims 1 to 3, **characterized in that** the pressure limiting valve (47) is integrated into the deaeration device (13), wherein the pressure limiting valve (47) is upstream of the suction means (14) configured as a Venturi nozzle (15).

5. The hydraulic system (10) according to one of claims 1 to 4, **characterized in that** the at least one hydraulic motor assembly (11, 11a, 11b) is connected to the hydraulic fluid reservoir (41) by an air intake line (20), wherein a reservoir of air (21) is provided for re-aeration when the at least one hydraulic motor assembly (11, 11a, 11b) is transposed into a load condition or after a constant pressure operation.

6. The hydraulic system (10) according to claim 5, **characterized in that** the air reservoir (21) is configured as a container (22) disposed in the air intake line (20) and/or by an oversizing of a section (23) of the air intake line (20), wherein the section (23) is delimited by two non-return valves (24, 25).

7. The hydraulic system (10) according to one of claims 5 or 6, **characterized in that** a number of aeration valves (26, 26a, 26b) which corresponds to the number of hydraulic motors of the at least one hydraulic motor assembly (11, 11a, 11b) and which are disposed between the hydraulic fluid reservoir (12) and the air reservoir (21) are installed upstream of the air reservoir (21) disposed in the air intake line (20).

8. The hydraulic system (10) according to claim 7, **characterized in that** the respective aeration valve (26, 26a, 26b) is configured as a combination of an orifice plate (36) and a non-return valve (37), the functions of which are combined in a common valve housing (38).

9. The hydraulic system (10) according to claim 8, **characterized in that** the respective aeration valve (26, 26a, 26b) comprises a connector (31) on the hydraulic fluid reservoir side and a connector (35) on the motor housing side, wherein the orientation of the respective aeration valve (26, 26a, 26b) in the installed position is perpendicular to a component (29) covering the hydraulic fluid reservoir (12).

10. The hydraulic system (10) according to claim 9, **characterized in that** the respective aeration valve (26, 26a, 26b) has a relatively movable plunger (39) which has a lower conical nipple (41) facing the connector (31) on the hydraulic fluid reservoir side and an upper conical nipple (43) provided with a notch (42) facing the connector (35) on the motor housing side.

11. The hydraulic system (10) according to claim 10, **characterized in that** the plunger (39) of a respective aeration valve (26, 26a, 26b) can be actuated as a function of the buildup of the partial vacuum (Δp) in the respective motor housing (16).

12. The hydraulic system (10) according to one of the preceding claims, **characterized in that** a filter unit (27) located in the hydraulic fluid reservoir (12) and which is disposed substantially vertically upright in the hydraulic fluid reservoir (12) is associated with the deaeration device (13).

13. The hydraulic system (10) according to claim 12, **characterized in that** the filter unit (27) comprises an air separator filter (51) and a hydraulic oil return filter (52) which are disposed on a common filter support frame (53).

14. The hydraulic system (10) according to claim 13, **characterized in that** an exit filter module (54) which contains an open-pored material as the filter material is installed on the outlet side downstream of the hydraulic oil return filter (52).

15. The hydraulic system (10) according to claim 13 or claim 14, **characterized in that** the air separator filter (51) is configured as a coarse filter.

## Revendications

1. Système hydraulique (10) qui est réalisé comme système à circuit fermé, le système hydraulique (10) comprenant au moins un agencement de moteur hydraulique et un réservoir de fluide hydraulique (12) couplé du point de vue hydraulique à cet agencement de moteur hydraulique (11, 11a, 11b), un dispositif de purge (13), destiné à purger un fluide hydraulique (50), étant associé à l'agencement de moteur hydraulique (11, 11a, 11b), au nombre d'au moins un, le dispositif de purge (13) présentant un dispositif d'aspiration (14), réalisé sous forme de buse venturi (15), pour aspirer le fluide hydraulique (50) de l'agencement de moteur hydraulique (11, 11a, 11b), au nombre d'au moins un, le dispositif d'aspiration (14) évacuant par dépression (Δp) du fluide hydraulique (50) de l'agencement de moteur hydraulique (11, 11a, 11b), au nombre d'au moins un, intégré dans au moins un carter de moteur (16), à travers une conduite de retour (17) pour l'amener dans le réservoir de fluide hydraulique (12), **caractérisé en ce qu'**une amenée d'huile de balayage précontrainte de l'agencement de moteur hydraulique (11, 11a, 11b), au nombre d'au moins un, en tant que fluide moteur (18) du dispositif d'aspiration (14), est prévue à travers une conduite de dérivation (19), une valve de limitation de pression (47) pilotée étant disposée dans la conduite de dérivation (19), valve qui est reliée par une ligne de signalisation (48) au carter de moteur (16), la dépression (Δp) dans le carter de moteur (16) servant à activer la valve de limitation de pression (47).

2. Système hydraulique (10) selon la revendication 1, **caractérisé en ce que** la valve de limitation de pression (47) est conçue pour réguler le dispositif de purge (13) avec le fluide moteur (18) fourni par l'agencement de moteur hydraulique (11, 11a, 11b), au nombre d'au moins un, en cas de sous-alimentation, notamment lorsque l'agencement de moteur hydraulique est à l'arrêt et sans charge.

3. Système hydraulique (10) selon la revendication 1 ou 2, **caractérisé en ce que** le dispositif de purge (13) comprend une chambre de mélange (44) placée en aval du dispositif d'aspiration (14), la chambre de mélange (44) étant reliée au réservoir de fluide hydraulique (12) par la conduite de retour (17).

4. Système hydraulique (10) selon une des revendications 1 à 3, **caractérisé en ce que** la valve de limitation de pression (47) est intégrée dans le dispositif de purge (13), la valve de limitation de pression (47) étant placée en amont du dispositif d'aspiration (14) réalisé comme buse venturi (15).

5. Système hydraulique (10) selon une des revendications 1 à 4, **caractérisé en ce que** l'agencement de moteur hydraulique (11, 11a, 11b), au nombre d'au moins un, est relié au réservoir de fluide hydraulique (41) par une conduite d'aspiration d'air (20), un réservoir d'air (21) étant prévu pour la nouvelle ventilation lorsque l'agencement de moteur hydraulique (11, 11a, 11b), au nombre d'au moins un, est amené dans un état de charge, ou après un fonctionnement à pression constante.

6. Système hydraulique (10) selon la revendication 5, **caractérisé en ce que** le réservoir d'air (21) est réalisé sous la forme d'un récipient (22) placé dans la conduite d'aspiration d'air (20) et/ou est obtenu par un surdimensionnement d'un tronçon (23) de la conduite d'aspiration d'air (20), le tronçon (23) étant délimité par deux clapets de non-retour (24, 25).

7. Système hydraulique (10) selon une des revendications 5 ou 6, **caractérisé en ce qu'**un nombre de valves de ventilation (26, 26a, 26b) correspondant au nombre de moteurs hydrauliques de l'agencement de moteur hydraulique (11, 11a, 11b), au nombre d'au moins un, est placé en amont du réservoir d'air (21) disposé dans la conduite d'aspiration d'air (20), lesquelles valves sont installées entre le réservoir de fluide hydraulique (12) et le réservoir d'air (21).

8. Système hydraulique (10) selon la revendication 7, **caractérisé en ce que** la valve de ventilation (26, 26a, 26b) respective est réalisée sous la forme d'une combinaison d'un diaphragme (36) et d'un clapet de non-retour (37), dont les fonctions sont regroupées dans un corps de valve (38) commun.

9. Système hydraulique (10) selon la revendication 8, **caractérisé en ce que** la valve de ventilation (26, 26a, 26b) respective comprend un raccord (31) côté réservoir de fluide hydraulique et un raccord (36) côté carter de moteur, l'orientation de la valve de ventilation (26, 26a, 26b) respective, dans la position de montage, étant perpendiculaire à un élément (29) recouvrant le réservoir de fluide hydraulique (12).

10. Système hydraulique (10) selon la revendication 9, **caractérisé en ce que** la valve de ventilation (26, 26a, 26b) respective comprend un poussoir (39) à déplacement relatif, qui présente un cône d'étanchéité inférieur (41), tourné vers le raccord (31) côté réservoir de fluide hydraulique, et un cône d'étanchéité supérieur (43) doté d'une encoche (43) et tourné vers le raccord (35) côté carter de moteur.

11. Système hydraulique (10) selon la revendication 10, **caractérisé en ce que** le poussoir (39) d'une valve de ventilation (26, 26a, 26b) respective peut être actionné en fonction de la formation de la dépression (Δp) dans le carter de moteur (16) respectif.

12. Système hydraulique (10) selon une des revendications précédentes, **caractérisé en ce qu'**une unité de filtre (27) située dans le réservoir de fluide hydraulique (12) est associée au dispositif de purge (13), laquelle unité est disposée de manière sensiblement verticale dans le réservoir de fluide hydraulique (12).

13. Système hydraulique (10) selon la revendication 12, **caractérisé en ce que** l'unité de filtre (27) comprend un filtre séparateur d'air (51) et un filtre de retour d'huile hydraulique (52), qui sont disposés sur un châssis de support de filtre (53) commun.

14. Système hydraulique (10) selon la revendication 13, **caractérisé en ce qu'**il est prévu, en aval du filtre de retour d'huile hydraulique (52), côté sortie de celui-ci, un module de filtre de sortie (54) qui contient un matériau à pores ouverts en tant que matériau filtrant.

15. Système hydraulique (10) selon la revendication 13 ou 14, **caractérisé en ce que** le filtre séparateur d'air (51) est réalisé sous forme de filtre grossier.
